Europäisches Patentamt

European Patent Office

Office européen des brevets

(19)

(11) Numéro de publication: **0 097 541**
**B1**

(12) FASCICULE DE BREVET EUROPEEN

(45) Date de publication du fascicule du brevet:
**23.04.86**

(51) Int. Cl.⁴: **H 04 B 7/26,** H 04 K 1/00

(21) Numéro de dépôt: **83401018.3**

(22) Date de dépôt: **20.05.83**

(54) Station fixe d'un système de radiocommunications à sauts de fréquence, à émetteurs banalisés.

(30) Priorité: **27.05.82 FR 8209259**

(43) Date de publication de la demande:
**04.01.84 Bulletin 84/1**

(45) Mention de la délivrance du brevet:
**23.04.86 Bulletin 86/17**

(84) Etats contractants désignés:
**DE GB IT**

(56) Documents cités:
**DE - A - 954 754**

**IEEE TRANSACTIONS ON VEHICULAR TECHNOLOGY,
vol. VT-27, no. 4, novembre 1978, pages 264-275, New
York, US, G.R. COOPER et al.: "A spread-spectrum
technique for high-capacity mobile communications"
FOURTH INTERNATIONAL CONFERENCE IN DIGITAL
SATELLITE COMMUNICATIONS, 23-25 octobre 1978,
pages 306-311, New York, US, D. LOMBARD et ai.: "A
frequency division multiple access digital data
transmission system using digital speech interpolation
equipment and a viterbi decoder"**

(73) Titulaire: **THOMSON-CSF, 173, Boulevard Haussmann,
F-75379 Paris Cedex 08 (FR)**

(72) Inventeur: **Deman, Pierre, THOMSON-CSF SCPI 173, bld
Haussmann, F-75379 Paris Cedex 08 (FR)**
Inventeur: **Butin, Henri, THOMSON-CSF SCPI 173, bld
Haussmann, F-75379 Paris Cedex 08 (FR)**

(74) Mandataire: **Turlèque, Clotilde et ai, THOMSON-CSF
SCPI 19, avenue de Messine, F-75008 Paris (FR)**

**Description**

L'invention se rapporte aux systèmes de radio-communications assurant la liaison entre des mobiles et une ou plusieurs stations fixes sur des «canaux» à sauts de fréquence et plus particulièrement aux stations fixes d'un tel système.

Dans les systèmes classiques de radiocommunications du type de ceux décrits par exemple dans l'article IEEE 78 CH 1326-8 REG 7 «Fourth International Conference on Digital Satellite Communications» intitulé «A frequency division multiple access digital data transmission system using digital speech interpolation equipment and a viterbi decoder» ayant pour auteurs D. LOMBARD et al, chaque station fixe comporte un ensemble de N couples émetteur-récepteur. Chacun de ces couples est affecté à une communication pendant toute la durée de celle-ci. Le nombre N de couples émetteur-récepteur dans une station fixe est déterminé en fonction de l'intensité du trafic et du taux de perte maximum admissible. Ainsi, pour un trafic de 10 erlangs à l'heure chargée, il faut classiquement prévoir 15 émetteurs-récepteurs pour avoir un taux de perte de 5%.

Dans un système où les liaisons sont des liaisons à sauts de fréquence, une loi de saut de fréquence peut être affectée à chaque mobile. Les lois des différents mobiles d'un continuum espace-temps-fréquence sont indépendantes mais changent de valeurs simultanément et les valeurs de fréquences sont choisies dans un même ensemble de fréquences prédéterminées. L'émission se fait sur des paliers de fréquences séparés les uns des autres par des temps morts qui facilitent les changements de fréquences. Pour la réception les stations fixes doivent être à l'écoute de toutes les communications susceptibles d'être émises, et par conséquent tous les sous-ensembles de réception sont indispensables, soit 15 organes récepteurs dans l'exemple ci-dessus pour écouler le trafic de 10 erlangs avec un taux de perte de 5%.

Par contre, pour l'émission la station fixe gère l'ensemble des communications avec les stations mobiles de la cellule. Or les organes émetteurs sont parmi les éléments les plus coûteux de l'infrastructure nécessaire à la station fixe.

L'invention a pour objet une station fixe d'un système de radiocommunication à sauts de fréquence dans laquelle le nombre d'émetteurs est inférieur au nombre de récepteurs, les émetteurs étant banalisés et affectés uniquement aux portions de communications pendant lesquelles il est nécessaire d'émettre.

Suivant l'invention, une station fixe d'un système de radiocommunications à sauts de fréquence, dans laquelle l'émission est faite sur des paliers de fréquences variant par sauts, synchrones pour tous les émetteurs, comportant pour un raccordement à n liaisons téléphoniques d'émission-réception, n récepteurs affectés aux n liaisons de réception est caractérisée en ce qu'elle comporte p émetteurs banalisés par rapport aux n liaisons d'émission, p étant inférieur à n, un circuit de commande général recevant n signaux, caractéristiques des états d'activité ou de non activité des liaisons d'émission, générés par n circuits de gestion associés aux n liaisons d'émission et fournissant d'une part des signaux d'autorisation d'émission aux p émetteurs, d'autre part des signaux de commande de connexion, la station comportant également deux matrices de connexion à n entrées de signal, p sorties de signal, et des entrées de commande recevant les signaux de commande de connexion, la première pour relier au maximum p parmi les n liaisons d'émission aux entrées de signal des p émetteurs, la seconde établissant les mêmes connexions pour relier au maximum p parmi n générateurs de loi temps/fréquence associés aux n liaisons d'émission aux entrées de commande de fréquence de p émetteurs.

L'invention sera mieux comprise et d'autres caractéristiques apparaîtront à l'aide de la description qui suit en référence aux figures annexées.

La figure 1 représente un mode de réalisation d'une station fixe comportant autant d'émetteurs que de récepteurs.

La figure 2 est un diagramme de signaux explicatifs.

La figure 3 représente un mode de réalisation d'une station fixe suivant l'invention.

La figure 4 est un second diagramme de signaux explicatifs.

Tous les émetteurs et récepteurs du réseau et en particulier tous ceux de la station fixe fontionnent sur des paliers en synchronisme séparés par des temps morts, les fréquences de ces paliers étant déterminés par l'heure et le numéro d'identification de l'abonné destinataire.

Par ailleurs, une caractéristique des liaisons téléphoniques est que la moyenne des temps effectifs de transmission est de l'ordre du quart de la durée totale de la communication, un facteur 2 étant lié au fait que la transmission est bilatérale (seul l'un des deux abonnés parle à la fois), l'autre facteur 2 étant lié aux temps morts et aux silences inter-mots et inter-syllabes d'une conversation courante. En conséquence, dans la station fixe suivant l'invention, les émetteurs ne sont utilisés que pendant le temps strictement nécessaire à l'émission du signal téléphonique ou des signaux de procédure, c'est-à-dire qu'un circuit d'émission n'est plus réservé pour une communication entière mais seulement pour des portions de communication. En dehors de ces périodes d'émission, aucun signal n'est transmis, pas même une porteuse non modulée. Ainsi le temps d'occupation à l'émission pour une communication est notablement inférieur à la durée de la communication et un émetteur peut être libéré entre deux périodes d'émission d'une même communication. Etant donné par ailleurs que chaque émetteur doit changer de fréquence à chaque palier d'émission, il n'est pas gênant d'appliquer cette commande de changement de fréquence, liée au numéro d'identification de l'abonné destinaire, à un émetteur ou à un autre indifféremment au moyen d'une gestion commune de l'ensemble des périodes d'activité des communications en cours; ceci permet d'affecter des portions des communications à des émetteurs banalisés et de réduire le nombre des émetteurs nécessaires à une station fixe pour l'écoulement d'un trafic donné par rapport à un système comportant des émetteurs couplés à des récepteurs et affectés à des communications entières.

Un tel système introduit aux heures les plus chargées, des coupures supplémentaires dans les communications, mais leur effet est négligeable par rapport à la réduction de matériel correspondante et ne gêne pas l'audition. Ainsi, pour une station fixe à 15 organes récepteurs, si le nombre des émetteurs est réduit à 10, les coupures introduites lors de la durée de simultanéité de 15 communications sont équivalentes à un taux de 0,36% de brouillage intrinsèque supplémentaire, le brouillage intrinsèque étant le brouillage dû au fait que les fréquences de deux paliers de lois de fréquences différentes, mais dont les fréquences sont choisies dans un même ensemble, peuvent coïncider. De plus, comme le brouillage intrinsèque, du fait que les coupures se font par paliers entiers, leur effet est moins gênant que des erreurs réparties, même à un taux inférieur.

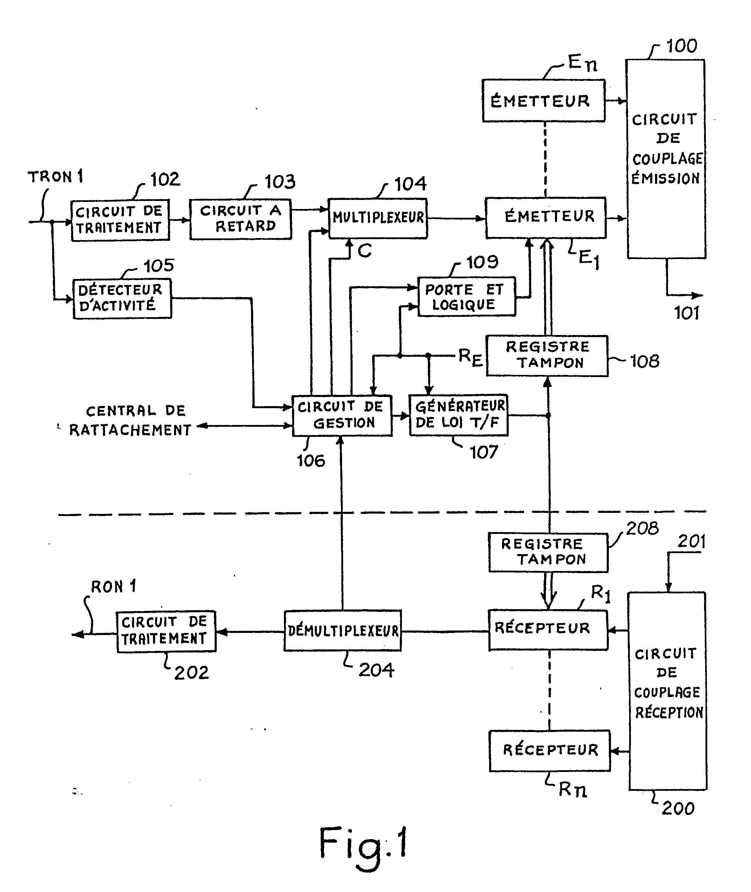

La figure 1 représente une station fixe conforme à l'art connu en ce qu'elle comporte autant d'émetteurs que de récepteurs, dans un système à sauts de fréquence.

Cette station fixe comporte n émetteurs $E_1$ ... $E_n$ et n récepteurs, $R_1$ ... $R_n$, seuls les premiers et les $n^{èmes}$ ayant été représentés. Les émetteurs $E_i$ (i = 1 à n) ont leurs sorties reliées aux entrées d'un circuit de couplage d'émission 100 dont la sortie 101 est reliée à l'antenne d'émission. De manière analogue dans la partie réception de la station, l'antenne de réception est reliée aux entrées des différents récepteurs par l'intermédiaire d'un circuit de couplage réception 200. Les émetteurs et récepteurs sont associés par couples tels que $E_1 R_1$ ... $E_i R_i$ ... $E_n R_n$, de façon fixe par une ligne téléphonique «4 fils» composée d'une paire «transmission» $TRON_i$ et d'une paire «récepteur», $RON_i$, en provenance d'un canal téléphonique de rattachement radio.

D'autres circuits nécessaires au bon fonctionnement du système sont associés à chaque couple émetteur-récepteur. Seuls ceux correspondant à $E_1$ $R_1$ ont été représentés sur la figure 1.

Lorsqu'une communication est en cours sur la ligne 1 avec un mobile, le signal téléphonique, parole, tonalité, ..., arrive sur la ligne $TRON_1$ sous forme analogique, MIC, ou autre, et est appliqué à l'entrée d'un circuit de traitement 102. Ce circuit de traitement transforme ce signal en un signal de forme convenable pour la transmission radio. Ce circuit de traitement 102 peut être par exemple un convertisseur MIC-DELTA, ou un convertisseur analogique-DELTA. Pour un système où l'émission radio se fait suivant une loi de sauts de fréquence, avec un temps mort entre les paliers de fréquence, le circuit de traitement 102 comporte également des moyens de découpage et de compression temporelle du train binaire résultant de la conversion, afin de l'adapter à la transmission par paliers. Le signal comprimé est transmis à la sortie du circuit de traitement 102, reliée à l'entrée d'un circuit à retard 103. La sortie de ce circuit à retard est reliée à la première entrée d'un multiplexeur 104 dont la sortie est reliée à l'entrée de l'émetteur correspondant soit $E_1$.

La ligne de transmission $TRON_1$ est également reliée à l'entrée d'un circuit détecteur d'activité 105 qui effectue la discrimination silence/activité vocale ou silence/signaux de service. La sortie du détecteur d'activité 105 délivre donc une information d'activité ou de non activité sous forme d'un signal à deux états appliqué à l'une des entrées d'un circuit de gestion 106 de la communication. Ce circuit de gestion 106 est également relié au central téléphonique de rattachement par l'intermédiaire d'une liaison bilatérale qui permet les échanges d'informations nécessaires à l'établissement puis au déroulement et à la fin de la communication entre ce central de rattachement et le circuit de gestion de la communication. Ce circuit de gestion comporte par ailleurs une entrée de signal de rythme $R_E$ dont la récurrence est celle des paliers d'émission, ce signal binaire de rythme émission étant fourni par une base de temps générale non représentée sur la figure. Ce circuit de gestion 106, par exemple à microprocesseur, crée les signaux de procédure usuels nécessaires au bon déroulement de la communication, par exemple la télécommande de la puissance du mobile. Ces signaux de procédure sont transmis à l'émetteur par l'intermédiaire de la deuxième entrée du multiplexeur 104. Le circuit de gestion 106 fournit également le signal de commande à l'entrée de commande C du multiplexeur 104.

Pour une transmission suivant une loi à sauts fréquence, un générateur 107 de lois de sauts de fréquence en fonction du temps, loi T/F, est également associé au couple émetteur-récepteur. Pour la génération de cette loi de sauts de fréquence, le générateur comporte une entrée de signal d'identification reliée à une sortie correspondante du circuit de gestion, donnant l'information d'identification du canal correspondant au début de l'établissement de la liaison. Ce générateur de loi temps-fréquence reçoit également le signal binaire de rythme émission $R_E$. A chaque début d'impulsion de rythme $R_E$, le générateur de loi T/F détermine un nouveau palier de fréquence et transmet la valeur de fréquence correspondante vers l'émetteur via un registre tampon 108.

Le même signal de rythme émission $R_E$ est également relié à la première entrée d'une porte ET logique 109 dont la seconde entrée reçoit un signal du circuit de gestion au niveau zéro lorsqu'aucune activité n'a été détectée par le détecteur d'activité 105. La sortie de la porte ET logique 109 est reliée à une entrée de commande de l'émetteur, de façon à couper l'émission de cet émetteur pendant les communications entre paliers d'une part et lorsqu'il n'y a ni activité téléphonique ni procédure à transmettre d'autre part.

Dans la partie réception, les éléments correspondant à ceux de la partie émission ont été désignés par les mêmes références augmentés de 100. Ainsi, chaque récepteur $R_i$ reçoit la valeur de la fréquence calculée au début d'un palier du générateur de lois temps-fréquence 107 par l'intermédiaire d'un registre tampon 208. Le signal démodulé reçu fourni par le récepteur R est appliqué à l'entrée d'un démultiplexeur 204 qui fournit sur ses deux sorties d'une part le signal d'information appliqué à l'entrée d'un circuit de traitement 202, et d'autre part les signaux de procédure appliqués à une entrée supplémentaire du circuit de gestion de la communication 106. Le circuit de traitement 202 joue le rôle inverse du circuit de traitement 102 et remet le signal téléphonique sous une forme utilisable par la paire réception $RON_1$.

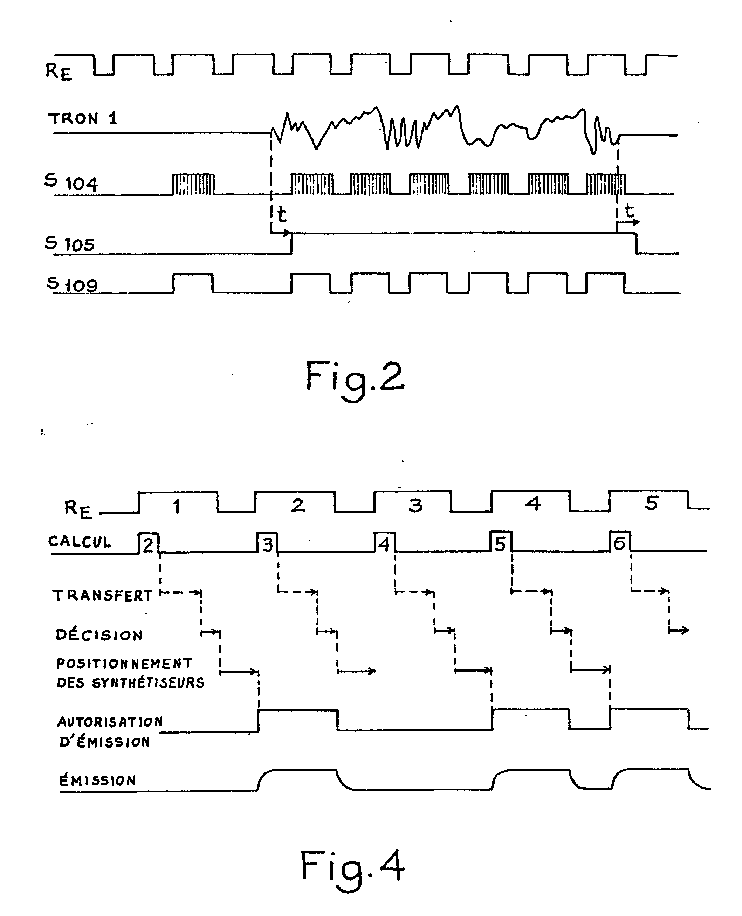

La figure 2 représente le diagramme de signaux associés au fonctionnement du circuit décrit en référence à la figure 1, pour l'émission. Les premiers signaux représentés sont le signal de rythme émission $R_E$, le signal analogique $TRON_1$, le signal de sortie du multiplexeur 104, $S_{104}$ qui comporte à titre d'exemple un premier palier d'émission sur lequel est transmis un signal de procédure puis des paliers d'émission sur lesquels sont transmis le signal analogique comprimé dans une forme adaptée à son émission. Le signal de sortie du détecteur d'activité $S_{105}$ est décalé par rapport au signal téléphonique $TRON_1$ de la durée t nécessaire à la détection. Le signal $S_{109}$ est le signal d'autorisation d'émission transmis par la porte logique 109 à l'émetteur correspondant.

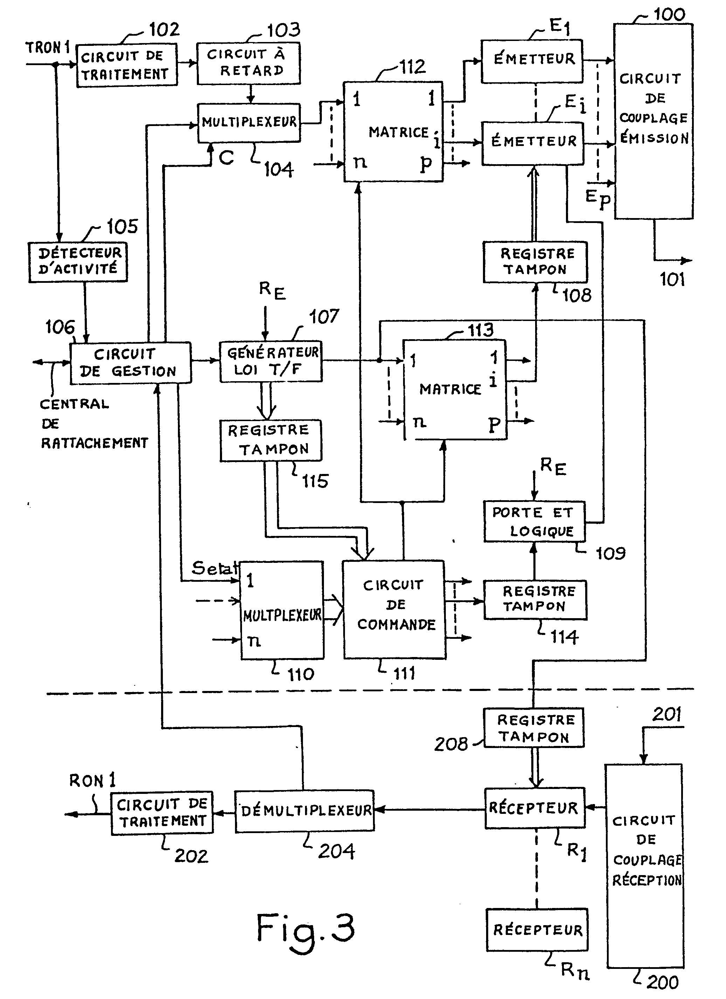

La figure 3 représente un mode de réalisation d'une station fixe suivant l'invention. Sur cette figure les mêmes éléments que sur la figure 1 ont été désignés par les mêmes références. Dans ce système, il y a autant de lignes téléphoniques «4 fils» que dans le système précédent. Soit n paires «transmission» $TRON_1$ ... $TRON_n$ et n paires «réception» $RON_1$ ... $R_n$. De même, il y a autant de récepteurs et de circuits associés que de lignes téléphoniques, la partie réception de ce système étant exactement semblable à la partie réception du système décrit en référence à la figure 1.

Par contre, dans la partie émission, la partie génération des signaux à transmettre associée à chaque ligne téléphonique est semblable à celle du système décrit en référence à la figure 1, mais le nombre d'émetteurs est inférieur au nombre de récepteurs. De plus, le système comporte des matrices de connexion destinées à relier les sorties des circuits de génération de signaux téléphoniques aux émetteurs, et les circuits de commande associés à ces matrices de connexion.

D'une manière plus détaillée, la partie émission comporte p émetteurs, $E_1$ ... $E_i$ ... $E_p$, dont les sorties sont reliées aux entrées du circuit de couplage d'émission 100, la sortie 101 de ce circuit étant reliée à l'antenne d'émission. La ligne téléphonique par exemple celle d'indice 1 $TRON_1$ est reliée au circuit de traitement 102 et au détecteur d'activité 105. La sortie du circuit de traitement 102 est reliée à la sortie du multiplexeur 104 via un circuit à retard 103 et la première entrée de ce multiplexeur 104. Le détecteur d'activité 105 a sa sortie reliée à une entrée du circuit de gestion 106, ce circuit étant relié au central de rattachement par une liaison bilatérale. Ce circuit de gestion génère comme dans le cas précédent les signaux de procédure appliqués à la seconde entrée du multiplexeur 104, le signal de commande appliqué à l'entrée C du multiplexeur, l'information d'identification du canal émetteur appliquée au générateur de lois de sauts de fréquence 107, et le signal de commande caractéristique des instants où il y a soit activité téléphonique soit procédure à transmettre pour le canal correspondant. Ce dernier signal n'est plus appliqué comme précédemment directement à une porte logique destinée à la commande d'un émetteur mais est appliqué à l'entrée d'un multiplexeur qui regroupe l'ensemble des n liaisons portant les informations d'activité téléphonique. La sortie de ce multiplexeur est reliée à une entrée d'un circuit de commande général des émetteurs, 111, avantageusement à microprocesseur, commun à l'ensemble de la station. Le regroupement des liaisons portant les informations d'activité sur le multiplexeur 110 à destination du circuit de commande 111 est destiné à avertir ce circuit de commande lorsqu'il y a un changement dans la configuration des liaisons d'indice 1 à n en activité. Dans un autre mode de réalisation du système, ces liaisons peuvent être regroupées sur un système d'interruption du microprocesseur.

Les sorties des n multiplexeurs tels que 104, sont reliées aux n entrées d'une matrice de connexion 112 à p sorties, p étant inférieur à n. De même, les sorties des n générateurs de lois temps-fréquence 107 sont reliées aux n entrées d'une matrice de connexion 113 à p sorties. Les p sorties de cette matrice 113 sont reliées aux entrées de p registres tampon 108 dont les sorties sont reliées aux entrées de commande de fréquence des p émetteurs $E_1$ à $E_p$. Sur le schéma de la figure 3, il a été supposé que le signal à transmettre appliqué à la ligne $TRON_1$ était émis par l'émetteur d'indice i, $E_i$. Les matrices 112 et 113 peuvent être de technologie quelconque, mais elles doivent être suffisamment rapides. La commande d'émission de l'émetteur, soit $E_i$, est un signal issu du circuit de commande 111 via un registre tampon 114 et une porte ET logiquue 109, la seconde entrée de la porte 109 recevant comme précédemment le signal de rythme émission $R_E$. Le circuit de commande 111 fournit également un signal de commande aux matrices 112 et 113, les connexions établies par ces deux matrices étant semblables à un instant donné.

Le circuit de commande 111, microprocesseur par exemple comme indiqué ci-dessus, possède en mémoire la liste L des émetteurs en cours d'émission, et la liste L' des émetteurs au repos. Pour chaque émetteur en émission, le numéro de la ligne TRON correspondante est également mis en mémoire. La mise à jour de ces mémoires est réalisée via le multiplexeur 110. Lorsque le signal d'état associé à la ligne d'émission $TRON_j$ passe de l'état 1 à l'état 0 c'est-à-dire que la ligne correspondante cesse son activité soit sur un silence soit sur un fin de procédure, le circuit de commande 111 modifie les données en mémoire et fait passer l'émetteur i, qui transmettait la communication, au repos, la commande correspondante étant transmise par l'intermédiaire du registre tampon 114 et de la porte logique 109.

De la même manière, lorsque le signal d'état caractéristique de la liaison d'indice j passe de l'état 0 à l'état 1 et caractérise le début d'activité de la liaison d'indice j, le circuit de commande 111 lui affecte pour l'émission un émetteur d'indice i de la liste des émetteurs libres L' et le fait passer dans la liste L en envoyant simultanément les ordres nécessaires aux matrices de connexion 112 et 113 et aux registres tampon 114.

Ainsi les émetteurs sont banalisés et affectés à chacune des liaisons nécessitant une émission au fur et à mesure des besoins et en fonction des périodes d'activité de ces différentes liaisons.

Le calcul de la fréquence du palier d'émission suivant pour une liaison en cours est réalisé pendant l'émission ou du palier en cours et le synthétiseur de fréquence de l'émetteur affecté à la communication est réalisé pendant le temps mort entre deux paliers successifs.

Un perfectionnement de la station fixe suivant l'invention consiste à associer à chacun des n générateurs de lois T/F tels que 107 un registre tampon 115 dans lequel est transféré le numéro du palier de fréquence calculé à partir de la référence horaire et du numéro d'identification de l'abonné destinataire. Ce transfert est réalisé dès que le calcul est réalisé. Ces n registres tampons tels que 115 sont reliés au circuit de commande général 111. Ce circuit de commande explore systématiquement à la fin d'un palier d'émission tous les registres 115 et tient à jour une liste L'' des numéros des fréquences à émettre au palier suivant par les émetteurs actifs (au maximum p).

Un test est réalisé dans le circuit de commande 111 pour vérifier que, au niveau de la station fixe deux ou plusieurs émissions à une même fréquence ne sont pas demandées sur le palier suivant. Si c'est le cas, une seule des émissions demandées est conservée par le circuit de commande et sur le palier suivant, seule cette émission est réalisée.

Ce perfectionnement permet de réduire le brouillage intrinsèque en remplaçant pour l'une des communications l'émission par un silence, ce qui permet d'émettre ce palier dans de bonnes conditions au moins pour une communication.

La figure 4 est un diagramme de signaux explicatifs montrant les différentes étapes du fonctionnement du circuit de gestion pour ce perfectionnement.

Les signaux représentés sont le signal de rythme $R_E$, un signal caractéristique des périodes de calcul du numéro du palier suivant «calcul». Le transfert dans les registres tampons 115 s'effectue sur la suite du palier et la décision est prise sur la fin de ce palier de façon que les synthétiseurs des émetteurs puissent être positionnés pendant le temps mort entre paliers. Ainsi pour un émetteur, un palier (le palier n° 3 sur la figure) peut être interdit ce qui se traduit par la suppression du palier correspondant dans le signal d'autorisation d'émission issu du circuit de commande et transféré à l'émetteur correspondant via le registre tampon 114 de la porte logique 109. Le dernier signal représente l'émission par l'émetteur correspondant.

## Revendications

1. Station fixe d'un système de radiocommunications à sauts de fréquence, dans laquelle l'émission est faite sur des paliers de fréquences variant par sauts, synchrones pour tous les émetteurs, comportant pour un raccordement à n liaisons téléphoniques d'émission-réception, n récepteurs ($R_1$ ... $R_n$) affectés aux n liaisons de réception, caractérisée en ce qu'elle comporte p émetteurs ($E_1$ ... $E_p$) banalisés par rapport aux n liaisons d'émission, p étant inférieur à n, un circuit de commande général (111) recevant n signaux, caractéristiques des états d'activité ou de non activité des liaisons d'émission, générés par n circuits de gestion (106) associés aux n liaisons d'émission et fournissant d'une part, des signaux d'autorisation d'émission aux p émetteurs, d'autre part, des signaux de commande de connexion, la station comportant également deux matrices de connexion (112, 113) à n entrées de signal, p sorties de signal, et des entrées de commande recevant les signaux de commande de connexion, la première (112) pour relier au maximum p parmi les n liaisons d'émission aux entrées de signal des p émetteurs, la seconde (113) établissant les mêmes connexions pour relier au maximum p parmi n générateurs (107) de loi temps/fréquence associés aux n liaisons d'émission aux entrées de commande de fréquence des p émetteurs.

2. Station selon la revendication 1, caractérisée en ce que le circuit de commande général (111) ne commande des modifications de connexion qu'au début et à la fin des périodes d'émission.

3. Station selon l'une des revendications 1 et 2, caractérisée en ce que le circuit de commande général comporte des moyens de comparaison des valeurs fournies par les générateurs de loi temps/fréquence associés aux n liaisons d'émission, pour interdire l'émission simultanée de deux émetteurs sur la même fréquence de palier.

## Patentansprüche

1. Feststation eines mit Frequenzsprung arbeitenden Funkverbindungssystems, bei welchem der Sendebetrieb auf sprungweise veränderlichen Frequenzstufen erfolgt, die für alle Sender synchron sind, mit für das Anschliessen an n Sende/Empfangs-Telefonverbindungen bestimmten n Empfängern ($R_1$ ... $R_n$), welche den n Empfangsverbindungen zugeordnet sind, dadurch gekennzeichnet, dass sie p Sender ($E_1$ ... $E_p$) enthält, welche in bezug auf die n Sendeverbindungen ohne feste Zuordnung sind, worin p kleiner ist als n, wobei eine Schaltung (111) zur allgemeinen Steuerung n Signale empfängt, welche kennzeichnend für die Aktivitäts- bzw. Nichtaktivitäts-Zustände der Sendeverbindungen sind und durch n Leitschaltungen (106) erzeugt werden, die den n Sendeverbindungen zugeordnet sind und einerseits an die p Sender Sende-Freigabesignale und andererseits Verbindungs-Steuersignale senden, und wobei die Station ferner zwei Verbindungsmatrizen (112, 113) mit n Signaleingängen, p Signalausgängen und Steuereingängen umfasst, welche die Verbindungs-Steuersignale empfangen, wobei die erste Matrix (112) höchstens p unter den n Sendeverbindungen mit den Signaleingängen der p Sender verbindet und die zweite Matrix (113) dieselben Verbindungen herstellt, um höchstens p unter n den n Sendeverbindungen zugeordneten Generatoren (107) zur Erzeugung von Zeit/Frequenz-Gesetzen mit den Frequenzsteuereingängen der p Sender zu verbinden.

2. Station nach Anspruch 1, dadurch gekennzeichnet, dass die Schaltung (111) zur allgemeinen Steuerung Verbindungsänderungen nur zu Anfang und zu Ende der Sendeperioden steuert.

3. Station nach einem der Ansprüche 1 und 2, dadurch gekennzeichnet, dass die Schaltung zur allgemeinen Steuerung Mittel zum Vergleich der Werte umfasst, welche von den Generatoren für die Zeit/Frequenz-Gesetze, welche den n Sendeverbindungen zugeordnet sind, geliefert werden, um die gleichzeitige Aussendung durch zwei Sender auf derselben Frequenzstufe zu verhindern.

**Claims**

1. Fixed station of a frequency jump radio-communications system wherein the transmission is performed on stepwise varying frequency levels which are synchronized for all of the transmitters, comprising n receivers ($R_1 \ldots R_n$) associated with n reception connections in view of the connection to n transmission-reception telephone connections, characterized in that it comprises p transmitters ($E_1 \ldots E_p$) without determined association with respect to the n transmission connections, p being smaller than n, a general control circuit (111) receiving n signals characteristic of the activity or non-activity states of the transmission connections as generated by n handling circuits (106) associated with the n transmission connections and supplying, on the one hand, transmission enabling signals to the p transmitters and, on the other hand, connection control signals, the station further comprising two connection matrices (112, 113) having n signal inputs, p signal outputs and control inputs receiving the connection control signals, the first (112) for connecting a maximum of p among the n transmission connections to the signal inputs of the p transmitters, the second (113) establishing the same connections to connect a maximum of p among n time/frequency law generators (107) associated with the n transmission connections to the frequency control inputs of the p transmitters.

2. Station according to claim 1, characterized in that the general control circuit (111) controls connection modifications only at the beginning and at the end of the transmission periods.

3. Station according to any of claims 1 and 2, characterized in that the general control circuit comprises comparing means for comparing the values supplied by the time/frequency law generators associated with the n transmission connections, to disable the simultaneous transmission of two transmitters on the same frequency level.

Fig.1

Fig.2

Fig.4

Fig.3